# EUROPEAN PATENT APPLICATION

(11) **EP 3 174 171 A1**
(43) Date of publication of application: **31.05.2017**
(21) Application number: 16200375.0
(22) Date of filing: 24.11.2016
(51) Int. Cl.: H02G 11/02

(54) **SELF WINDING LINEAR UNIT**

(30) Priority: 24.11.2015 TW 104138985
(71) Applicant: Liu, Wen-Cheng, Taipei City 11685 (TW)
(72) Inventor: Liu, Wen-Cheng, Taipei City 11685 (TW)
(74) Representative: Lang, Christian

(57) **Abstract**

The present invention relates to a self winding linear unit, and more particularly to a linear unit able to self roll-up and wind round to manage a cable, or a plurality of the linear units may be stacked in multiple forms to manage cables. The linear unit is assembled from a center protruding body, a left-side protruding portion, and a right-side protruding portion, wherein the left-side protruding portion and the right-side protruding portion are respectively configured on the left and right sides of the center protruding body. Moreover, a spacing between the left and right-side protruding portions on a bottom portion of the center protruding body defines a holding space. When the center protruding body on one end of the linear unit is curved round and embedded in the holding space of its own main body, a self roll-up and winding cable arranger is achieved. When the center protruding body on one end of the linear unit is embedded in the holding space of another linear unit, then a plurality of the linear units may be stacked to form a tiered cable arranger.

## Description

### BACKGROUND OF THE INVENTION

### (a) Field of the Invention

The present invention relates to a self winding linear unit, and more particularly to a cable manager structural unit that is able to self roll-up and wind round or may be tier stacked to manage cables.

### (b) Description of the Prior Art

With the advancement of technology, though electronic products have produced an improvement in people's living standards, they have also brought about considerable inconvenience. And from another aspect, people have become substantially dependent on electronic products such as digital cameras, tablet computers, smart cell phones, and the like. People will usually take along these electronic products when they leave their home so they can use them at any time. However, in order to meet the needs to transmit data or charge batteries, these electronic products include numerous cables, such as a USB (Universal Serial Bus) connection cable, an earphone cable, and the like. General methods for storing cables involve first folding up the cables and then placing them directly inside a pouch, tying up the cables using rubber bands, cable clips, and the like.

With reference to the Republic of China Patent No. M505489, which discloses a cable taking-in device that enables the user to independently take in cables, thereby eliminating the problem of the cables becoming entangled as seen in the prior art. The cable taking-in device comprises a main body, a retaining area, a clasp groove, and a clasp piece. The outer edge of the main body is provided with a groove, and the groove encircles the circumference of the main body. The retaining area is configured on the inner side of the main body, and an edge of the retaining area is provided with a passage opening. The passage opening connects the groove with the retaining area. The clasp groove is configured in one side of the main body, and the clasp piece is configured on another side of the main body. One end of a cable is disposed inside the retaining area; the cable is then made to enter the groove through the passage opening and is wound around the main body following the groove. Using this invention to take in cables eliminates the problem of various cables becoming entangled with other objects, and apart from the benefit of taking in cables, the invention also has the advantage of further providing the convenience of easy carrying.

With further reference to the Republic of China Patent No. M505116, which discloses a portable power source and USB cable comprising: a portable power source, one corner of which is provided with a connection portion that is used to connect with a USB cable; a USB cable, the front end of the USB cable is provided with a USB connector, and the rear end of the USB socket is connected to a connection device. The rear end of the connection device is provided with a linear body structure, and the linear body structure is able to extend and contract. The size of the connection device is slightly larger than the aforementioned connection portion. When the linear body structure is not being pulled to extend it outwards, because of its size, the aforementioned connection device is retained in the connection portion. The aforementioned linear body structure is a steel tape measure. According to the aforesaid design, there is no need to carry an additional charging cable, moreover, the design provides the effect of convenience of easy carrying.

The aforementioned prior arts are all able to resolve the problems related to USB cable storage method and prevent cables from becoming entangled when using them, thus avoiding having to spend time putting the cables in order. However, regardless of whether the above prior art of the cable taking in device is used or the extending and contracting means of the portable power source and USB cable is used to achieve the object of taking in cables, they all require the user to carry additional devices to take in the cables. And, although effectively resolving the problem of taking in cables, they also result in becoming a hindrance on the user in having take along additional taking in devices. There is thus a need for improvement.

Accordingly, it is the strong desire of the inventor and manufacturers engaged in related art, and purpose of the present invention, to research, improve, and resolve the problems and shortcomings of the aforementioned prior art.

### SUMMARY OF THE INVENTION

Hence, in light of the aforementioned shortcomings, the author of the present invention, having collected related data, and through evaluation and consideration from many aspects, as well as having accumulated years of experience in related arts, through continuous testing and improvements, has designed the present invention.

The primary object of the present invention lies in providing a self winding linear unit, whereby using the special composite structure of the linear unit enables achieving a self roll-up and winding cable arranger, or the linear units may be stacked to form a tiered cable arranger, thereby allowing the user to express their creativity to stack the linear units in multiple forms to manage cables.

In order to achieve the aforementioned or other objects, the present invention provides a self winding linear unit, wherein the linear unit comprises at least: a center protruding body, a left-side protruding portion, and a right-side protruding portion. The left-side protruding portion and the right-side protruding portion are structured to form a single body with the center protruding body on the left and right sides thereof. Moreover, a spacing formed between the left and right-side protruding portions exactly defines a holding space in the bottom portion of the center protruding body.

When the center protruding body on one end of the linear unit is curved round and embedded into the holding space of its own main body or the holding space of other linear units, the effect of self rolling-up and winding of cables is achieved, or the effectiveness to enable tier stacking multiple forms to manage cables is achieved.

According to the aforementioned principal characteristics, the linear unit is a signal line, power line, network cable, or optical fiber cable.

According to the aforementioned principal characteristics, the interior of the linear unit is a metallic conductor (such as: covered copper wire serving as a signal line or for use as a power line), or a non-metallic conductor (such as: covered glass fiber for use as an optical fiber) depending on the purpose of the linear unit.

According to the aforementioned principal characteristics, the linear unit is made from flexible insulation material.

To enable a further understanding of said objectives and the technological methods of the invention herein, a brief description of the drawings is provided below followed by a detailed description of the preferred embodiments.

### BRIEF DESCRIPTION OF THE DRAWINGS

Figure 1 is an external elevational view of a self winding linear unit of the present invention.
Figure 2 is an external assembled view depicting a plurality of the self winding linear units stacked to form an integral body according to the present invention.
Figure 3 is a cross sectional schematic view of an assembly of a plurality of self winding combination linear units provided with sunken reliefs and protruding reliefs according to the present invention.
Figure 4 is a cross sectional assembled schematic view of a plurality of self winding combination linear units provided with the sunken reliefs and the protruding reliefs according to the present invention.
Figure 5 is an elevational schematic view of a self winding linear unit of the present invention depicting the linear unit self rolled-up and wound to manage a cable.
Figure 6 is an elevational schematic view of the self winding linear unit of the present invention depicting another method of managing cables by stacking a plurality of the linear units to create a tiered form.

### DETAILED DESCRIPTION OF THE PREFERRED EMBODIMENTS

A detailed description of the technological means adopted to achieve the aforementioned object and effectiveness are provided below together with the diagrams that show the preferred embodiments, structure, characteristics, and functions of the present invention to facilitate complete understanding thereof.

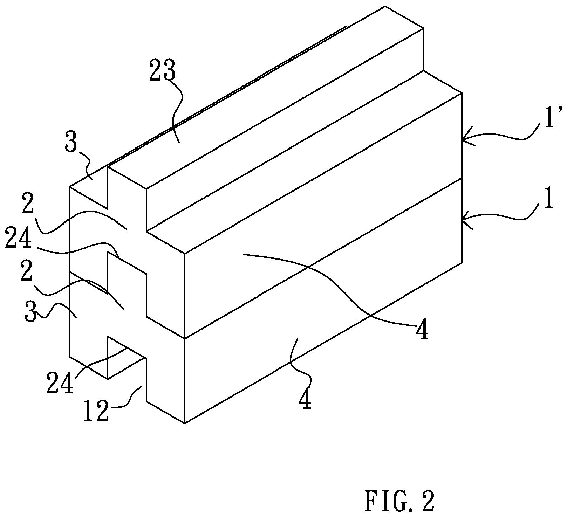

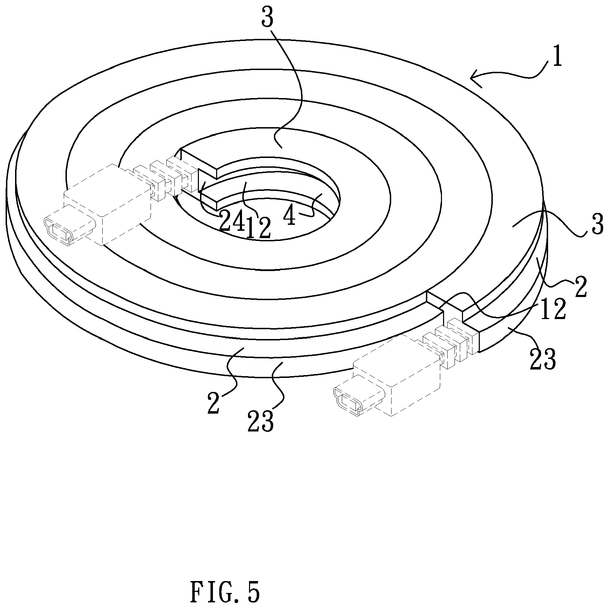

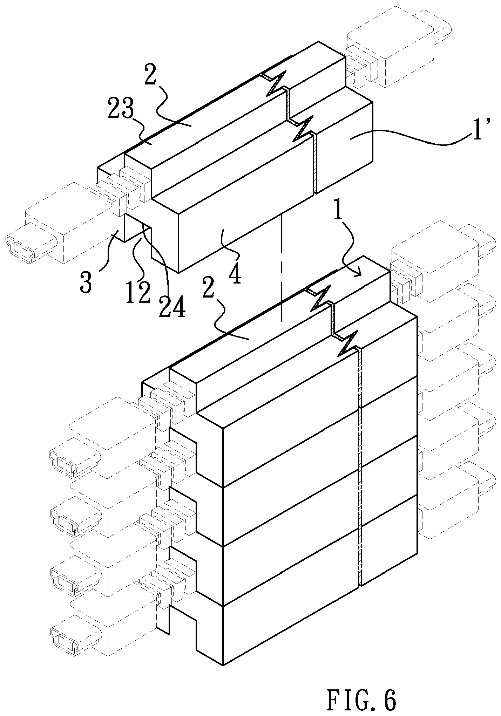

Referring to the diagrams depicted in Figures 1 and 2, and Figures 5 and 6, Figure 1 is an external elevational view of a self winding linear unit of the present invention; Figure 2 is an external assembled view of the self winding linear unit of the present invention, which shows a plurality of linear units stacked to form an integral body; Figure 5 is an elevational schematic view of the self winding linear unit of the present invention, which shows the linear unit self rolled-up and wound to manage a cable; and Figure 6 is an elevational schematic view of the self winding linear unit of the present invention depicting another method of managing cables by stacking a plurality of the linear units to create a tiered form.

As shown in the diagrams, the present invention provides a self winding linear unit, wherein the exterior of a linear unit 1 is primarily made from flexible insulation material. The linear unit 1 may be used for disposing therein a general signal line, a power line, a network cable, or an optical fiber cable. Hence, depending on the circumstances and purpose thereof, the linear unit 1 is a covered metallic conductor (such as: copper wire) or a non-metallic conductor (such as: glass fiber). The following first provides a description using the above examples.

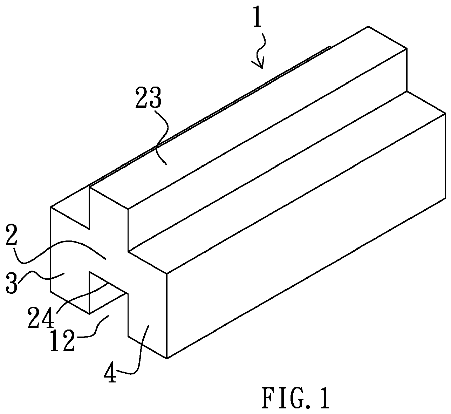

The linear unit 1 described in the present invention primarily comprises a center protruding body 2, a left-side protruding portion 3, and a right-side protruding portion 4, wherein the left-side protruding portion 3 and the right-side protruding portion 4 are configured on the left side and the right side respectively of the center protruding body 2 (as shown in Figure 1). Moreover, the spacing formed between the left and right-side protruding portions 3, 4 exactly defines a holding space 12 on a bottom portion 24 of the center protruding body 2. The width of the holding space 12 must match the width of the center protruding body 2 (as shown in Figure 2), thereby enabling the center protruding body 2 of the linear unit 1 to mutually join with the holding space 12 defined in its own main body of the linear unit 1 (as shown in Figure 5) to achieve self winding effectiveness, or the center protruding body 2 of the linear unit 1 is joined to the holding space 12 of another combination linear unit 1' to form an integral body (as shown in Figure 6), thereby achieving the stacking of a plurality of the linear units 1, 1' to create a tiered form.

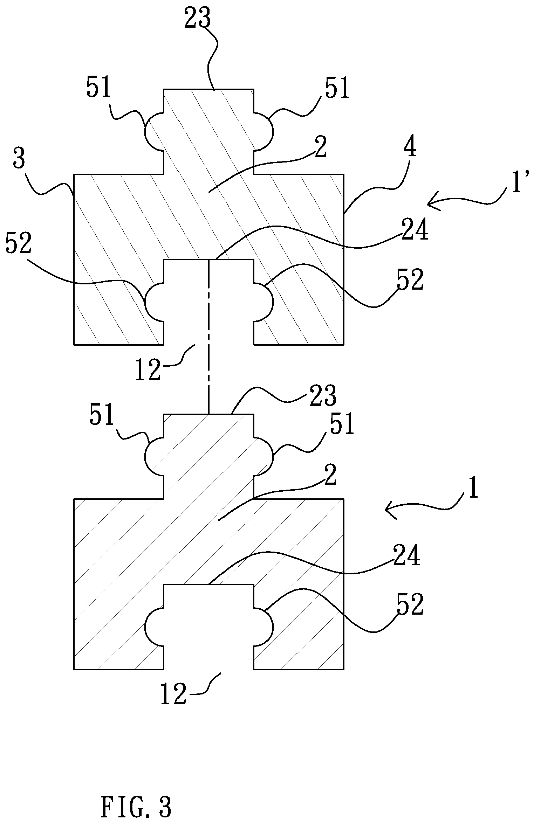

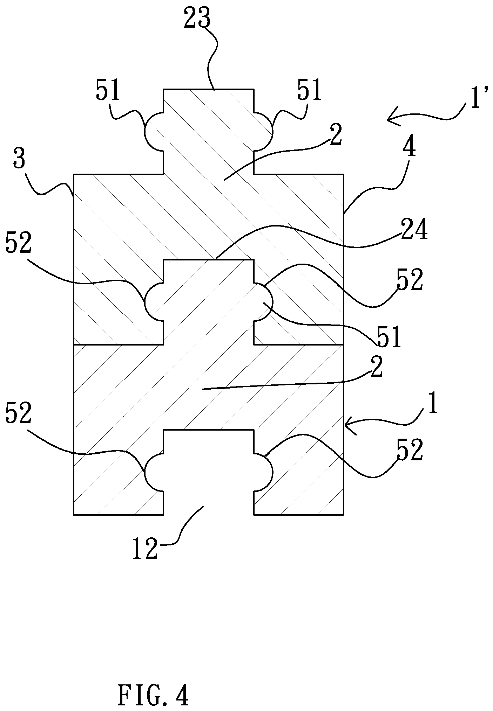

Referring to Figures 3 and 4, Figure 3 is a cross sectional schematic view of an assembly of a plurality of self winding combination linear units of the present invention, which shows the linear units provided with sunken reliefs and protruding reliefs; and Figure 4 is a cross sectional assembled schematic view of a plurality of self winding combination linear units of the present invention, which shows the linear units provided with sunken reliefs and protruding reliefs.

As shown in the diagrams, regardless of whether the linear unit 1 is self winding or stacked with other linear units 1' to form a tiered cable arranger, both use the friction produced from the mutual surfaces of the center protruding body 2 and the holding space 12 corresponding thereto to firmly connect together and form an integral body, thereby eliminating anxieties about the linear units 1, 1' coming loose and separating. If the weight of the linear unit 1 itself of the present invention is excessively heavy or its length is excessively long, to avoid the frictional force produced from the surfaces between the center protruding body 2 and the other holding space 12 corresponding thereto being insufficient, depending on circumstances, the surface of the center protruding body 2 of the present invention and the surface of the holding space 12 corresponding thereto are respectively provided with a single or a plurality of protruding reliefs 51 and corresponding sunken reliefs 52 to increase the frictional force therebetween. However, the shape required for the protruding reliefs 51 and the corresponding sunken reliefs 52 is not limited to that described in the present invention, the only condition being that they are able to correspondingly join together.

According to the aforementioned structure and constructional design of the present invention, use of the present invention is described hereinafter. Referring to Figure 5, it can be clearly seen from the drawing that the combination linear units 1 of the present invention uses self winding to take in a cable, wherein one end of the linear unit 1 serves as a helical center to begin winding, and the left-side protruding portion 3 and the right-side protruding portion 4 both protrude from the bottom surface 24 with the spacing between the two defining the holding space 12. The holding space 12 may then be used to enable disposition of a cable therein in a winding helical configuration (as shown in Figure 5), whereby the top surface 23 of the center protruding body 2 is sequentially embedded into the holding space 12 of its own main body, achieving the object of managing a cable.

Referring to Figure 6, which shows a combination of the linear units 1 of the present invention using a stacking method to manage cables. In the same fashion as the aforementioned, the left-side protruding portion 3 and the right-side protruding portion 4 both protrude from the bottom surface 24 of the present invention, and the spacing between the two defines the holding space 12. The top surface 23 of the center protruding body 2 of the lower linear unit 1 is embedded in the holding space 12 defined in the upper combination linear unit 1', thereby further achieving the effectiveness of a tiered cable arranger (as shown in Figure 6).

Accordingly, referring to all the attached diagrams, compared to the prior art, the present invention has the following advantages during use: the user can choose to adopt a self winding method to roll up and take in a cable or a stacking method to combine together and form a plurality of configurations of the linear units 1.

It is of course to be understood that the embodiments described herein are merely illustrative of the principles of the invention and that a wide variety of modifications thereto may be effected by persons skilled in the art without departing from the spirit and scope of the invention as set forth in the following claims.

## Claims

1. A self winding linear unit, comprising at least a center protruding body 2, a left-side protruding portion 3, and a right-side protruding portion 4; wherein the left-side protruding portion 3 and the right-side protruding portion 4 are respectively configured on left and right sides of the center protruding body 2, and spacing formed between the left and right-side protruding portions 3, 4 exactly defines a holding space 12 in a bottom portion 24 of the center protruding body 2;
the center protruding body 2 at one end of the linear unit 1 is curved round and embedded into the holding space 12 of its own main body to achieve self rolling-up and winding of a cable, or is embedded in the holding space 12 of another linear unit 1' to achieve stacking of a plurality of the linear units 1, 1' in multiple forms to manage cables.

2. The self winding linear unit according to claim 1, wherein the linear unit 1 is a signal line, a power line, a network cable, or an optical fiber cable.

3. The self winding linear unit according to claim 1, wherein an interior of the linear unit 1 is a covered metallic conductor or a non-metallic conductor.

4. The self winding linear unit according to claim 1, wherein the linear unit 1 is made from flexible insulation material.
